# EUROPEAN PATENT APPLICATION

(11) **EP 2 498 475 A1**
(43) Date of publication of application: **12.09.2012**
(21) Application number: 11799060.6
(22) Date of filing: 01.09.2011
(51) Int. Cl.: H04L 29/08

(54) **METHOD, DEVICE AND SYSTEM FOR ADVERTISING INFORMATION**

(30) Priority: 31.12.2010 CN 201010619794
(71) Applicant: Huawei Technologies Co., Ltd., Shenzhen, Guangdong 518129 (CN)
(72) Inventor: LI, Kun, Guangdong 518129 (CN)
(74) Representative: Isarpatent
(86) International application number: PCT/CN2011/079237
(87) International publication number: WO 2012/088916

(57) **Abstract**

An information publishing method is provided in an embodiment of the present invention, including: receiving a response message that corresponds to a user request message, wherein the response message contains Web page content; obtaining a user behavior feature; determining a publishing position in the Web page content according to the obtained user behavior feature; adding content of information to be published to the publishing position to obtain a modified response message; and sending the modified response message to a terminal for display. In addition, a network device and an information publishing system are provided accordingly in embodiments of the present invention.

## Description

This application claims priority to Chinese Patent Application No. 201010619794.1, filed with the Chinese Patent Office on 31 December, 2010, and entitled "INFORMATION PUBLISHING METHOD, APPARATUS AND SYSTEM", which is hereby incorporated by reference in its entirety.

### FIELD OF THE INVENTION

The present invention relates to a communications technology field, and in particular, to an information publishing method, and apparatus and system.

### BACKGROUND

As the largest global communication network, the Internet greatly enriches the communication methods and lives of people. Among the enormous applications of Internet, information publishing is a common application, including publishing of advertisements and notification of specific messages.

Similar to the information publishing mode of the print media, the early Internet information publishing mode simply pays attention to the covered crowds, without noticing whether these crowds are interested in the information to be published. As a result, the amount of published information is not in proportion to the actual publishing effect. To address this problem, the existing technology proposes the keyword information publishing mode, which uses keyword(s) to publish information. This mode takes advantage of the features of the search engine and establishes a mapping relationship between the content of the information to be published and the search keyword(s). When entering a search keyword, a user can view the relevant prompt messages related to the information to be published. The search keyword(s) capture the current concerns of users to a certain extent. Therefore, the probability of the users clicking the information to be published increases. For example, when the advertisement service uses this mode, the advertisement publishing benefits can be increased.

In the early information publishing mode and existing keyword information publishing mode, a publishing position is preset on the Web page of a Web site. When receiving a user request for the Web page, the Web site places the produced text, figure, or video at this position.

During the research and practice of the existing technology, the inventor of the present invention finds the following: The existing information publishing mode involves text, figure, or video. Therefore, once the information is produced, the information content on the Web page does not change, and can be published at only the reserved Web page position on the Web site. The publishing mode is not flexible.

### SUMMARY

Embodiments of the present invention provide an information publishing method, and apparatus and system to implement oriented and flexible publishing.

An information publishing method includes:
receiving a response message that corresponds to a user request message, wherein the response message contains Web page content;
obtaining a user behavior feature;
determining a publishing position in the Web page content according to at least the user behavior feature;
adding content of information to be published to the publishing position to obtain a modified response message; and
sending the modified response message to a terminal for display.

A network device includes:
a receiving unit, configured to receive a response message that corresponds to a user request message, wherein the response message contains Web page content;
a feature obtaining unit, configured to obtain a user behavior feature;
a position determining unit, configured to determine a publishing position in the Web page content according to at least the user behavior feature;
an information inserting unit, configured to add content of information to be published to the publishing position to obtain a modified response message; and
a sending unit, configured to send the modified response message to a terminal for display.

An information publishing system includes a user behavior server and any network device provided in embodiments of the present invention, wherein:
the user behavior server is configured to receive user net access data sent from the network device for user behavior analysis to obtain and store the user behavior feature for use by the network device.

It can be seen that the embodiments of the present invention implement oriented publishing of information by obtaining the user behavior feature, and matches the user behavior feature with the Web page content to flexibly determine the publishing position, and prevent the case that the publishing is not flexible because the publishing position cannot be changed. That is, the solution provided by the present invention implements oriented and flexible publishing.

### BRIEF DESCRIPTION OF THE DRAWINGS

To better illustrate the embodiments of the present invention or the technical solution of the prior art, the following briefly describes the drawings that need to be used for describing the embodiments or the prior art. Obviously, the drawings provided are merely several embodiments of the present invention. Those skilled in the art can obtain other drawings based on these drawings without creative efforts.

FIG. 1 is a flowchart of an information publishing method provided in Embodiment 1 of the present invention;

FIG. 2a shows a system networking scenario of an information publishing method provided in an embodiment of the present invention;

FIG. 2b shows a structure of an information publishing scheme provided in Embodiment 2 of the present invention;

FIG. 2c is a flowchart of user behavior analysis provided in Embodiment 2 of the present invention;

FIG. 2d is a flowchart of an information publishing method provided in Embodiment 2 of the present invention;

FIG. 3a shows a structure of an information publishing scheme provided in Embodiment 3 of the present invention;

FIG. 3b is a flowchart of user behavior analysis provided in Embodiment 3 of the present invention;

FIG. 3c is a flowchart of an information publishing method provided in Embodiment 2 of the present invention;

FIG. 4a shows a structure of an information publishing scheme provided in Embodiment 4 of the present invention;

FIG. 4b is a flowchart of user behavior analysis provided in Embodiment 4 of the present invention;

FIG. 4c is a flowchart of an information publishing method provided in Embodiment 4 of the present invention;

FIG. 5a shows a structure of a network device provided in an embodiment of the present invention; and

FIG. 5b shows a structure of another network device provided in an embodiment of the present invention.

### DETAILED DESCRIPTION

The technical solution under the present invention is described below with reference to the accompanying drawings. Evidently, the embodiments described below are for the exemplary purpose only, without covering all embodiments of the present invention. Those skilled in the art can derive other embodiments from the embodiments given herein without making any creative effort, and all such embodiments are covered in the protection scope of the present invention.

An information publishing method, apparatus, and system are provided in embodiments of the present invention. The method, apparatus, and system are described in the following in detail.

### Embodiment 1

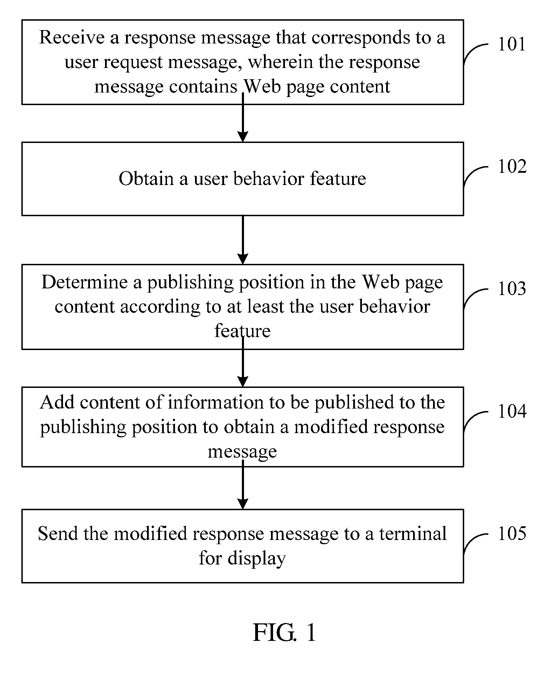

FIG. 1 shows an information publishing method provided in an embodiment of the present invention. This embodiment describes the method from the aspect of a network device. The network device can be a device that supports a user data forwarding function, such as a Network Gateway and a network router. The network device provides the deep packet inspection (DPI, Deep Packet Inspection) function, and can identify and parse user data packets. The method can include:

Step 101: receive a response message that corresponds to a user request message, wherein the response message contains Web page content;
for example, the response message that corresponds to the user request message can be a Web page browsing response message, such as a Hypertext Transfer Protocol (HTTP) response message and a message using another network protocol, where the Web page browsing response message contains the Web page content which can be a text Web page or stream media;

Step 102: obtain a user behavior feature;
where, the user behavior feature refers to various data that is used to describe user behavior inclinations and is a group of feature descriptions that can describe user interests;
for example, any one of the following methods can be used to obtain the user behavior feature:

(1) obtain a user identity from the response message received at step 101, or obtain the user identity from the user request message that corresponds to the response message, and then query a user feature database according to the user identity to obtain a user behavior feature that corresponds to the user identity;
where, obtaining the user identity from the user request message that corresponds to the response message can be as follows: storing a user identity that is carried in the user request message after the user request message is received; and after receiving the response message that corresponds to the user request message, querying the user feature database according to the stored user identity to obtain the user behavior feature that corresponds to the user identity; and

(2) generally, to not impact normal service processing of the network device such as a Network Gateway, the user feature database that stores the user behavior feature is integrated in another independent entity that is called user behavior analysis server in an embodiment of the present invention. In an implementation mode, to simplify the signaling flow between the network device and the user behavior analysis server, after finding the user behavior feature in the user feature database, the network device determines whether to store the user behavior feature in a user feature store module according to a store algorithm. If the network device determines that the user behavior feature needs to be stored, the network device directly obtains the user behavior feature from the user feature store module next time when the network device needs to obtain the user behavior feature without the need to query the user feature database. That is, in addition to querying a user feature database according to a user identity to obtain a user behavior feature that corresponds to the user identity, the following method can be used:
determine whether the user behavior feature that corresponds to the user identity exists in the user feature store module; and if yes, obtain the user behavior feature that corresponds to the user identity from the user feature store module, or if no, execute the step of querying the user feature database according to the user identity;

Step 103: determine a publishing position in the Web page content according to at least the user behavior feature;
as an example, find a word associated with the user behavior feature in the Web page content, in which a position where the word associated with the user behavior feature is in the Web page content is served as the publishing position, or an area within a first threshold range from the position where the word associated with the user behavior feature is in the Web page content is served as the publishing position; or,
as another example, obtain a Web page keyword related to the Web page content (that is, Web page content contained in the response message), and match the user behavior feature obtained in step 102 with the Web page keyword; if the user behavior feature does not match the Web page keyword, the process ends, and the response message is sent to the terminal for display; if the user behavior feature matches the Web page keyword, a position where the Web page keyword is in the Web page content is served as the publishing position, or an area within a first threshold range from the position where the Web page keyword is in the Web page content is served as the publishing position; or,
as another example, obtain a Web page keyword related to the Web page content (that is, Web page content contained in the response message), find a word associated with the user behavior feature and Web page keyword in the Web page content, in which a position where the word associated with the user behavior feature and Web page keyword is in the Web page content is served as the publishing position, or an area within a first threshold range from the position where the word associated with the user behavior feature and Web page keyword is in the Web page content is served as the publishing position; or,
as another example, query an advertisement information database according to the user behavior feature obtained in step 102 to obtain an advertisement keyword that corresponds to the user behavior feature; find a word associated with the advertisement keyword in the Web page content, in which a position where the word associated with the advertisement keyword is in the Web page content is served as the publishing position, or an area within a first threshold range from the position where the word associated with the advertisement keyword is in the Web page content is served as the publishing position; or,
as another example, obtain a Web page keyword related to the Web page content; query an advertisement information database according to the user behavior feature obtained in step 102 and the Web page keyword to obtain an advertisement keyword that corresponds to the user behavior feature and the Web page keyword; find a word associated with the advertisement keyword in the Web page content, in which a position where the word associated with the advertisement keyword is in the Web page content is served as the publishing position, or an area within a first threshold range from the position where the word associated with the advertisement keyword is in the Web page content is served as the publishing position;
where, the advertisement keyword is information that embodies core ideas of the advertisement content; in addition, the first threshold can be flexibly set according to actual application requirements;
it should be noted that in the preceding implementation modes, the advertisement information database stores associated user behavior feature, advertisement keyword, and advertisement information content; at least one of these items can be used to find the advertisement information content that corresponds to at least one of these items, for example, the advertisement information content that corresponds to the user behavior feature and advertisement keyword can be found according to the user behavior feature and the advertisement keyword;
where, any one of the following methods can be used to obtain the Web page keyword related to the Web page content:

(1) extract (or dig) directly the Web page keyword from the Web page content, that is, extract the Web page keyword from the Web page content by using a keyword extracting algorithm, for example, extract the Web page keyword according to the occurrence frequency of a word;

(2) obtain a Web page link address, and obtain the Web page keyword from a Web page keyword database according to the Web page link address; if no Web page keyword can be obtained from the keyword database, extract the Web page keyword from the Web page content, specifically, extract the Web page keyword from the Web page content by using a keyword extracting algorithm, for example, extract the Web page keyword from the Web page content according to the occurrence frequency of a word;

(3) after obtaining the Web page keyword, the network device determines whether to store the Web page keyword in a Web page keyword store module according to a store algorithm; if the network device determines that the Web page keyword needs to be stored, the network device directly obtains the Web page keyword from the Web page keyword store module next time when the network device needs to obtain the Web page keyword without the need to extract the Web page keyword from the Web page content or query the Web page keyword database. That is, the network device can do as follows:
obtain a Web page link address; and obtain the Web page keyword from a Web page keyword module according to the Web page link address; if no Web page keyword can be obtained from the Web page keyword store module, obtain the Web page keyword from the Web page keyword database according to the Web page link address; if no Web page keyword can be obtained from the Web page keyword database, extract the Web page keyword from the Web page content, specifically, extract the Web page keyword from the Web page content by using a keyword extracting algorithm, for example, extract the Web page keyword from the Web page content according to the occurrence frequency of a word;
where, the Web page keyword database can be preset or established by the network side;

Step 104: add content of information to be published to the publishing position to obtain a modified response message;
the content of the information to be published can be advertisement information content, and there are multiple styles of the advertisement information content in different implementation modes, for example, to indicate an advertisement hyper link or the advertisement content;
the forms of the inserted advertisement information content in different implementation modes can be, for example, an advertisement at a fixed position or a floating advertisement; as an example, the floating advertisement can be a mouse floating advertisement, in which the advertisement information content is displayed when the user places the mouse pointer over the publishing position;
that is, step 104 can be as follows: inserting advertisement information content associated with the user behavior feature and the Web page keyword, for example, adding a predefined advertisement Web page code to obtain a response message into which an advertisement is inserted;
as an example, if the response message received in step 101 is an HTTP response message, the network device modifies the HTTP response message in step 104 by inserting a predefined advertisement Web page code at the publishing position so that the original Web page content and the inserted content are displayed to the user when the user receives the HTTP response message; and

Step 105: send the modified response message to a terminal for display.

it can be seen from the above that, the user behavior feature represents a user type, a requirement, and an inclination to a certain extent, and therefore this embodiment uses the user behavior feature to find a certain type of user group and publish information to the user group, thereby implementing oriented publishing of information. In addition, this scheme can match the user behavior feature with the Web page content to flexibly determine the publishing position, thereby preventing the problem in the prior art where the publishing position in the Web page cannot be changed and the publishing is not flexible. That is, the use of this scheme can implement oriented and flexible publishing of information (such as advertisements). Further, this embodiment does not involve changes to the existing Web page on the Web site, but implements real-time restructuring on the existing Web page through a network device, thereby reducing publishing costs.

### Embodiment 2

The method described in Embodiment 1 is further described with examples in this embodiment.

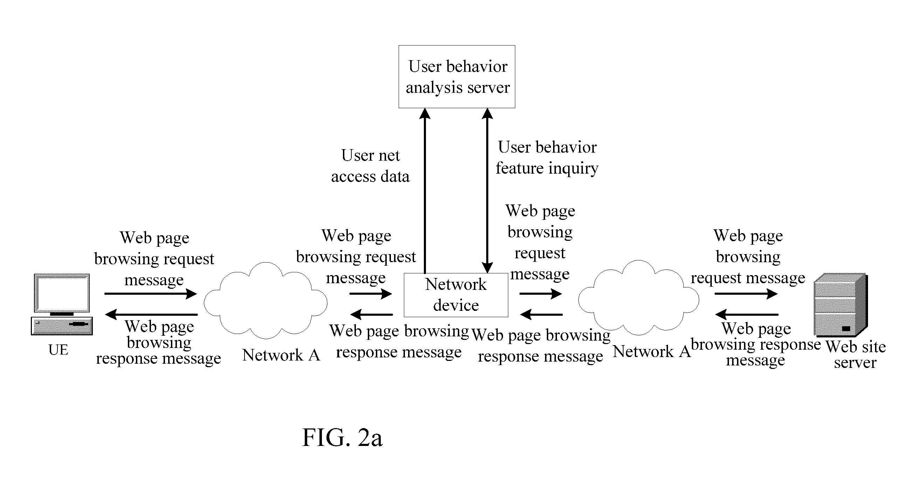

As shown in FIG. 2a, the functional entities involved in the information publishing method include a terminal, a Web site server, a network device, and a user behavior analysis server.

(1) Terminal

The terminal refers to a client that originates a Web page browsing request message (such as an HTTP request message). The terminal can be a fixed network terminal such as a personal computer (PC), or a mobile terminal such as a mobile phone.

(2) Web site server

The Web site server can be a Web server that provides the World Wide Web (WWW) service and is used to receive a Web page browsing request sent by a terminal and return a Web page browsing response message (an HTTP response message) that contains Web page content.

(3) Network device

The network device is a network transmission device located between the terminal and the Web site server, specifically, a network router or a Network Gateway that provides a user data forwarding function. The network device provides a DPI function to identify and parse user data packets. The device is a core functional entity for implementing the embodiment of the present invention and is responsible for extracting user information and inserting information to be published.

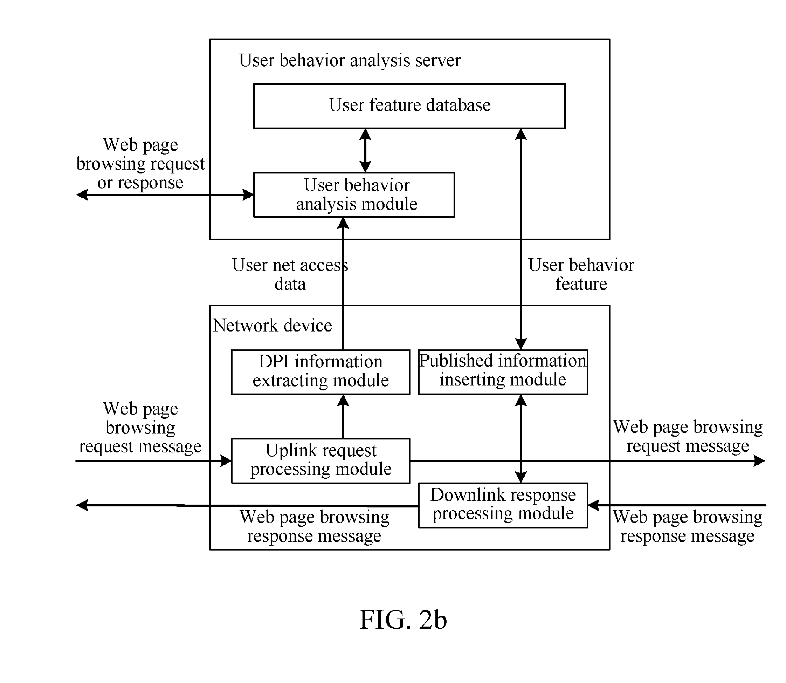

As shown in FIG. 2b, the network device can include:

an uplink request processing module, configured to process a Web page browsing request message sent by a user, forward the Web page browsing request message to the Web site server, and send the Web page browsing request message to a DPI information extracting module for identification and parsing, where, the Web page browsing request message contains a user identity;
the DPI information extracting module, configured to perform protocol identification on the Web page browsing request message to identify a request type (for example, HTTP), perform corresponding protocol (for example, HTTP protocol) parsing after the request type (for example, HTTP) is identified, parse a net access information field from the Web page browsing request message, and send user net access data such as the access information field and user identity to the user behavior analysis server for analysis;
a downlink response processing module, configured to process the Web page browsing response message sent by the Web site server, analyze and modify the Web page browsing response message, and forward the Web page browsing request message after modification to the terminal; and
a published information inserting module, configured to communicate with the user behavior analysis server to obtain a user behavior feature , to extract a Web page keyword, to determine a publishing position in the Web page browsing response message according to the Web page keyword and user behavior feature, and to insert information to be published to the publishing position.

(4) User behavior analysis server

The user behavior analysis server is a functional entity that is responsible for user behavior analysis. The server receives user net access data from the network device for user behavior analysis, and provides a query interface for the network device to query the user behavior feature.

As shown in FIG. 2b, the user behavior analysis server can include:
a user behavior analysis module, configured to receive user net access data from the network device, download the Web page content from a network to perform analysis, perform user behavior modeling to analyze user behavior, and store data obtained through analysis to a user feature database, where the data obtained through analysis is called user behavior feature; and
the user feature database, configured to store a mapping relationship between a user identity and a user behavior feature, and store a user behavior feature.

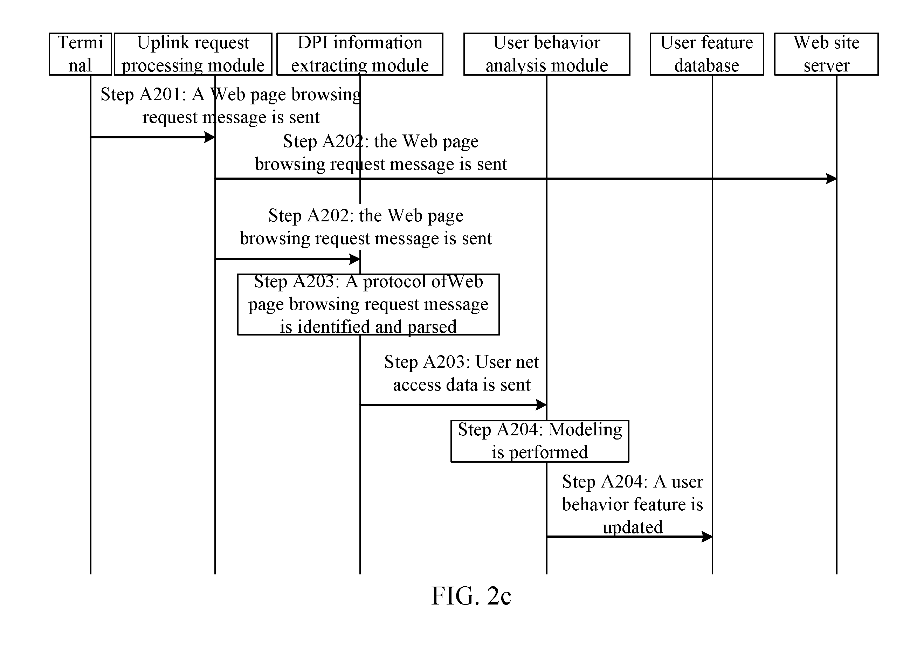

The following describes the process of the information publishing method. As shown in FIG. 2c, the process can be as follows:

(1) User behavior analysis procedure

This is the prerequisite of the information publishing method provided in an embodiment of the present invention.

The user behavior analysis procedure is a constantly on-going procedure during network running. The purpose is to perform modeling on user behavior by analyzing the user net access data to obtain the user behavior feature. The method is an existing technology, and therefore it is described briefly herein. As shown in FIG. 2c, the procedure is as follows:

Step A201: The terminal sends a Web page browsing request message to an uplink request processing module in a network device, where, the Web page browsing request message contains a user identity and Web page link information, and the Web page link information can indicate the information of a Web page address, such as information of a universal resource locator (URL, Universal Resource Locator).

Step A202: after receiving the Web page browsing request message, the uplink request processing module forwards the Web page browsing request message to a Web site server, and sends the Web page browsing request message to a DPI information extracting module.

Step A203: The DPI information extracting module uses a DPI technology to perform protocol identification on the Web page browsing request message and identify a request type of the Web page browsing request message, and parses the Web page browsing request message according to the protocol that corresponds to the request type to obtain a net access information field; the DPI information extracting module obtains the user identity and Web page link information that are contained in the Web page browsing request message, and sends the obtained net access information field, user identity, and Web page link information as user net access data to the user behavior analysis server.
As an example, if the Web page browsing request message is an HTTP request, the DPI information extracting module can identify the request type as an HTTP report, and parse the Web page browsing request message according to the HTTP protocol to obtain the net access information field; then, the DPI information extracting module sends the user net access data such as the user identity and Web page link information that are contained in the HTTP request, and the net access information field to the user behavior analysis server.

Step A204: After receiving the user net access data, the user behavior analysis module of the user behavior analysis server obtains the user identity and Web page link information from the user net access data, performs modeling according to the user identity and Web page link information, and updates a model to the user feature database.

Alternatively, to obtain a more precise model, the processing process of obtaining the Web page that corresponds to the Web page link information can be requested from the Web site server, and modeling can be performed according to the processing process according to the user identity, Web page link information, and Web page.

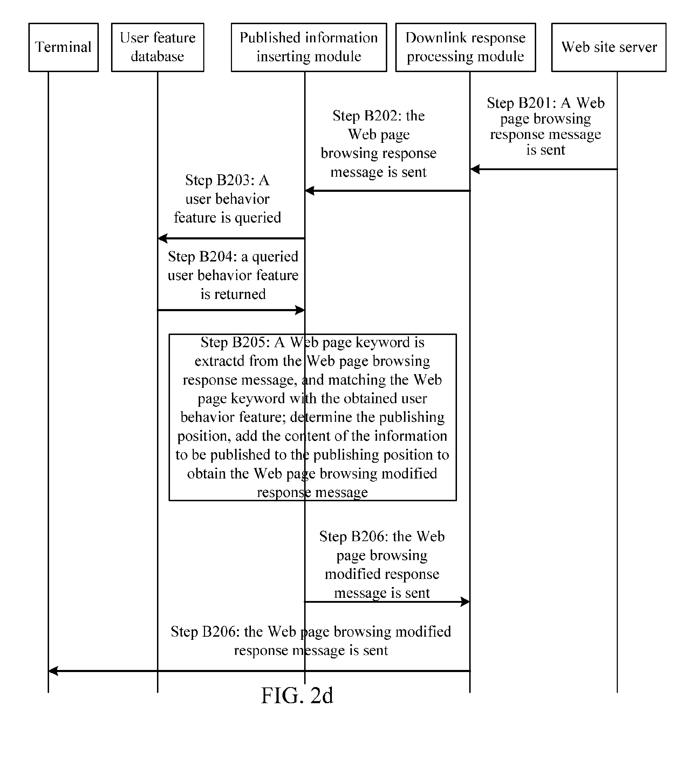

(2) After the user behavior analysis procedure is executed for a certain period and the user behavior model is established, information can be published. It mainly refers to that information to be published that corresponds to the user behavior feature is inserted, according to the user behavior feature, into the Web page browsing response message returned by the Web site server. As shown in FIG. 2d, the procedure can include:

Step B201: The Web site server sends the Web page browsing response message to the downlink response processing module in the network device, where the Web page browsing response message contains the Web page content.

Step B202: The downlink response processing module sends the Web page browsing response message to a published information inserting module to insert the information to be published, and sends the user identity to the published information inserting module, where the user identity can be carried in the Web page browsing response message, and the user identity refers to a user identity contained in the Web page browsing request message that corresponds to the Web page browsing response message.

Step B203: After receiving the Web page browsing response message, the published information inserting module sends a query message for querying the user behavior feature to the user behavior feature database in the user behavior analysis server, where the query message contains the user identity of a user to be queried;

Step B204: The user behavior feature database returns the user behavior feature of the user to be queried to the published information inserting module in the network device;

Step B205: The published information inserting module extracts the Web page keyword from the Web page browsing response message, and matching the Web page keyword with the obtained user behavior feature; and if the user behavior feature matches the Web page keyword, a position where the Web page keyword is in the Web page content is served as the publishing position, add the content of the information to be published to the publishing position to obtain the Modified Web page browsing response message, and send the Modified Web page browsing response message to the downlink response processing module in the network device; where, multiple matching modes are supported, including precise matching, in which both are identical, and phrase matching, in which the user behavior feature contains the Web page keyword.

As an example, after the Web page keyword is extracted, a Web page word and a position that are related to the user feature can be determined according to the Web page keyword, and then the code of predefined information to be published can be added to the position where the Web page word is in the Web page content to modify the original Web page browsing response message.

In addition, the Web page content can be directly searched, according to the user behavior feature, for associated word(s) without the need to extract the Web page keyword, the position(s) where the word(s) in the Web page content is served as the publishing position(s), and the code of the predefined information to be published is added to the position(s) where the word(s) is in the Web page content to modify the original Web page browsing response message.

It should be noted that, for the convenience of the setting and modification of the information to be published, the network device needs to provide an interface for device use personnel to set the code of the information to be published.

Step B206: The downlink response processing module analyzes and/or further modifies the Modified Web page browsing response message, and sends the Modified Web page browsing response message to the terminal for the terminal to display a Web page; where, the modification indicates that the downlink response processing module invokes the published information inserting module to insert information.

It can be seen from the above that, the user behavior feature represents a user type, a requirement, and an inclination to a certain extent. Therefore, the embodiment of the present invention uses the scheme of obtaining the user behavior feature to find a certain type of user group, and publish information to the user group, thereby implementing oriented information publishing. In addition, the scheme matches the user behavior feature with the Web page content to flexibly determine the publishing position, thereby preventing the problem in the prior art that the publishing position cannot be changed and is not flexible. Furthermore, the information to be published is inserted. Therefore, compared with the scheme in the prior art that the information to be published is directly fixed in the Web page content, the scheme facilitates changes to the information to be published by maintenance personnel at any time (that is, only the information to be published instead of the entire Web page needs to be modified). In other word(s), the use of this scheme implements oriented and flexible publishing of information (such as advertisements) and facilitates modification of the information to be published.

### Embodiment 3

Embodiment 3 and Embodiment 4 describe the method provided in Embodiment 2 with examples.

For the convenience of description, in the examples in Embodiment 3 and Embodiment 4, the network device is a Network Gateway, the information to be published is an advertisement, and the Web page browsing response message is an HTTP response message. It should be understood that in addition to an advertisement, the information to be published can be a message of other types, for example, notification and prompt for a specific group of people.

In this embodiment, in addition to the terminal and network server (for details, refer to Embodiment 2), two network entities are involved, including a Network Gateway and a user behavior analysis server. The Network Gateway is generally deployed at the network edge, and user requests sent by all terminals are forwarded and handled through the Network Gateway. Therefore, analyzing user behavior and publishing an advertisement on the Network Gateway helps cover as many terminals as possible. The user behavior analysis server is a server element connected to the Network Gateway, and is responsible for offline analysis of user packets, and does not affect normal processing of the Network Gateway.

(1) Network Gateway

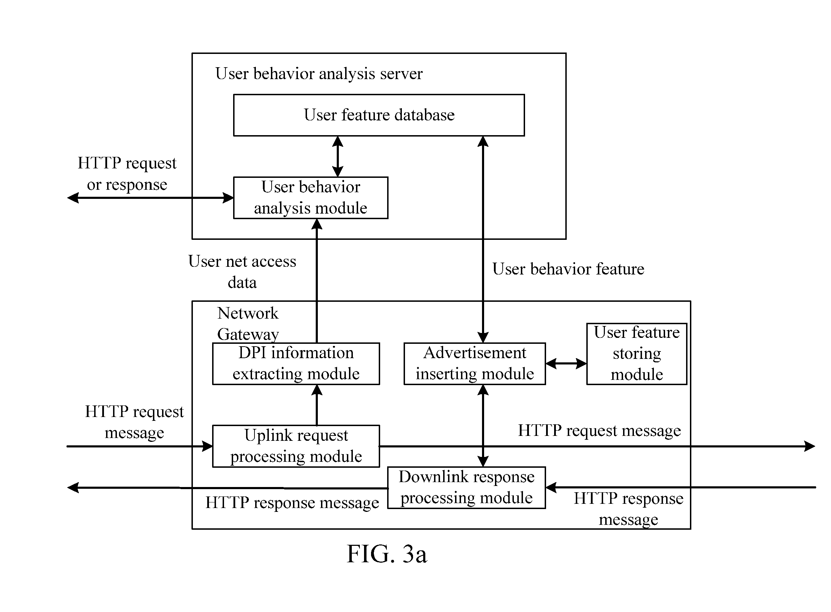

As shown in FIG. 3a, a Network Gateway can include:

an uplink request processing module, configured to process an HTTP request message sent by a user, forward the HTTP request message to a Web site server, and send the HTTP request message to a DPI information extracting module for identification and parsing, where, the HTTP request message contains a user identity;
a DPI information extracting module, configured to perform protocol identification on the HTTP request message, perform HTTP protocol parsing after identifying the request type as HTTP, parse a net access information field from the HTTP request message, and send user net access data such as the field and user identity to the user behavior analysis server for analysis;
a downlink response processing module, configured to process an HTTP response message sent by the Web site server, analyze and modify the HTTP response message, and forward the HTTP request message after modification to the terminal;
an advertisement inserting module, configured to communicate with the user behavior analysis server to obtain a user behavior feature, determine a publishing position in the HTTP response message according to the user behavior feature, and insert an advertisement to be published to the publishing position; and
a user behavior storing module, configured to store and manage the user behavior feature to reduce the number of times of interaction between the advertisement inserting module and the user behavior analysis server and improve the system processing efficiency.

(2) User behavior analysis server

As shown in FIG. 3a, the user behavior analysis server can include:
a user behavior analysis module, configured to receive user net access data sent by the Network Gateway, download the Web page from the Internet according to the URL information, analyze the Web page content, and perform modeling on user behavior to analyze the user behavior so as to obtain the user behavior feature, and store the user behavior feature into a user feature database; and
the user feature database, configured to store a mapping relationship between a user identity and a user behavior feature, and store a user behavior feature. It should be noted that the user feature database can be integrated into the user behavior analysis server or connected to the user behavior analysis server as an external database.

The following describes the process of the information publishing method. As shown in FIG. 2c, the process can include:

(1) User behavior analysis procedure

This is the prerequisite of the information publishing method provided in an embodiment of the present invention.

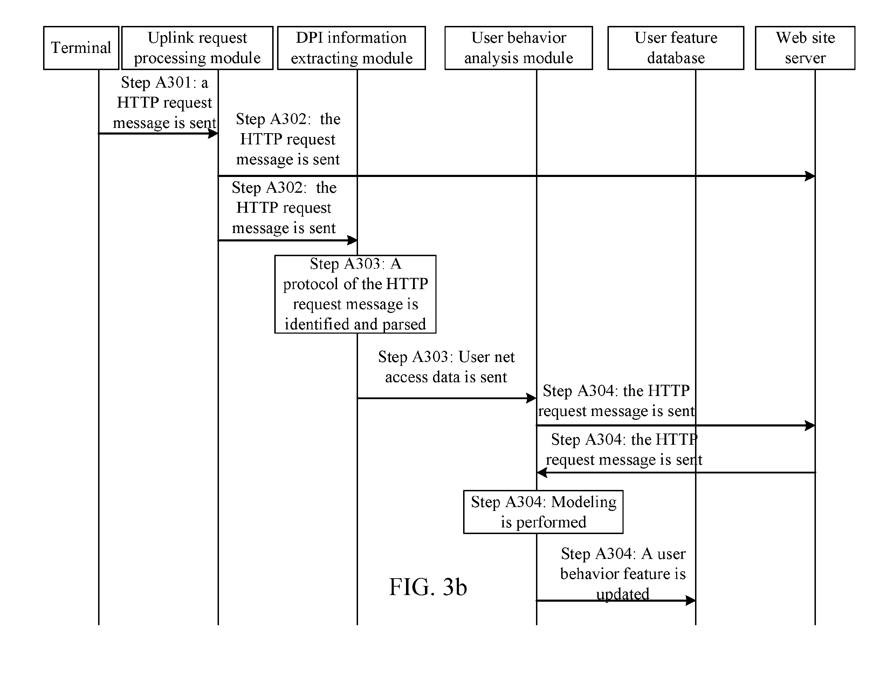

The user behavior analysis procedure is a constantly on-going procedure during the network running. The purpose is to perform modeling on user behavior by analyzing the user net access data to obtain the user behavior feature. The method is an existing technology, and therefore it is described briefly herein. As shown in FIG. 3b, the procedure is as follows:

Step A301: The terminal sends, an HTTP request message to an uplink request processing module in a network device, where the HTTP request message contains a user identity and Web page URL information.

Step A302: After receiving the HTTP request message, the uplink request processing module forwards the HTTP request message to a Web site server, and sends the HTTP request message to a DPI information extracting module.

Step A303: The DPI information extracting module uses a DPI technology to perform protocol identification on the HTTP request message and identifies the HTTP request message as an HTTP report, and parses the HTTP request message based on the HTTP protocol to obtain a net access information field; and the DPI information extracting module obtains the user identity and Web page URL information that are contained in the HTTP request message, packs user net access data such as the net access information field, user identity, and Web page URL information as a user datagram protocol (UDP, User Datagram Protocol) message, and sends the UDP message to the user behavior analysis module of the user behavior analysis server.

Step A304: After receiving the UDP message sent by the Network Gateway, the user behavior analysis module obtains the user identity and Web page URL information from the UDP message, sends an HTTP request message to the Web site server according to the Web page URL information and obtains an HTTP response message, and obtains the Web page content by parsing the HTTP response message. The user behavior analysis module uses the phrase algorithm and keyword extracting algorithm to extract the keyword(s) that can express the core idea of the Web page content from the Web page content and the weights of the keyword(s), and then uses the keyword(s) to classify user behavior to complete a modeling process and updates the established model to the user feature database.

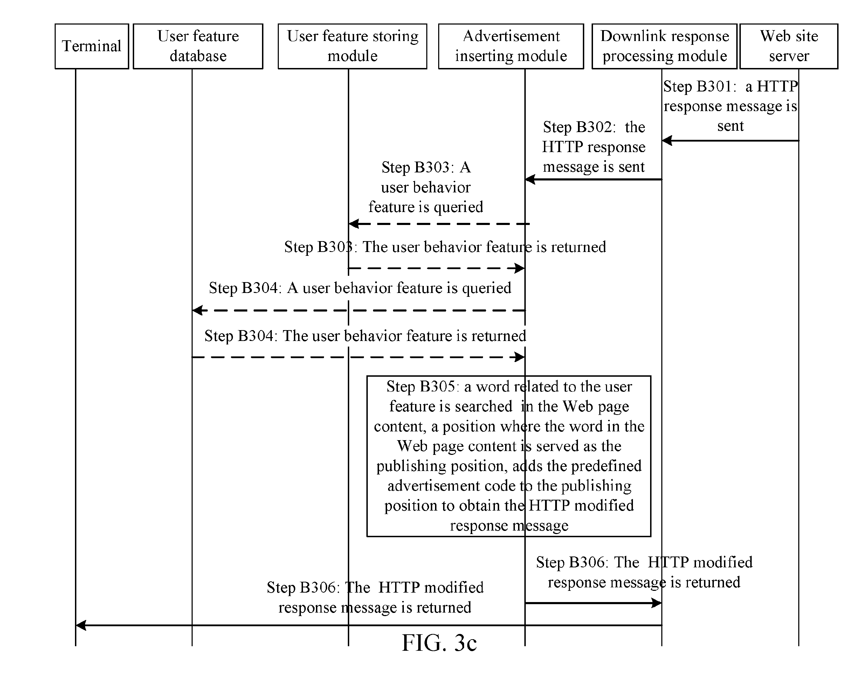

(2) After the user behavior analysis procedure is executed for a certain period and the user behavior model is established, the Network Gateway can publish information. It mainly refers to that an advertisement to be published that corresponds to the user behavior feature is inserted, according to the user behavior feature, into the HTTP response message returned by the Web site server. As shown in FIG. 3c, the procedure can include:

Step B301: The Web site server sends the HTTP response message to the downlink response processing module in the network device, where the message contains the HTTP protocol head and Web page content.

Step B302: The downlink response processing module sends the HTTP response message and the user identity of the HTTP request message that corresponds to the HTTP response message to the advertisement inserting module.

Step B303: The advertisement inserting module queries the user behavior feature from the user feature storing module, where:
if the user behavior feature that corresponds to the user identity exists in the user feature storing module, the user behavior feature is returned to the advertisement inserting module, and go to step B305; and
if the user behavior feature that corresponds to the user identity does not exist in the user feature storing module, a failure message is sent to the advertisement inserting module, and go to step B304.

Step B304: The advertisement inserting module sends a query message to the user feature database to obtain the user behavior feature, where: the query message contains the user identity;
after the user behavior feature is found in the user feature database according to the user identity, the user behavior feature is sent to the advertisement inserting module;
after the Network Gateway receives the user behavior feature, the user feature storing module determines whether to save this query result according to the storing algorithm.

Step B305: The advertisement inserting module searches word(s) related to the user feature in the Web page content, marking the position(s) where the words in the Web page content as the publishing position(s), adds the predefined advertisement code to the publishing position(s) to obtain a modified HTTP response message, and returns the modified HTTP response message to the downlink response processing module.
where, in specific implementation, adding the predefined advertisement code to the publishing position(s) can include: adding a floating advertisement next to the original word(s) at the publishing position(s), or adding a Web page link to the original word(s) at the publishing position(s) so that the advertisement is automatically displayed when the user clicks the word(s) or places the pointer at the word(s); and

Step B306: The downlink response processing module analyzes and further modifies the modified HTTP response message, and sends the modified HTTP response message to the terminal for the terminal to display a Web page.

It can be seen that the user behavior feature represents a user type, a requirement, and an inclination to a certain extent. Therefore, the embodiment of the present invention uses the scheme of obtaining the user behavior feature to find a certain type of user group, and publish information to the user group thereby implementing oriented information publishing. In addition, this scheme matches the user behavior feature with the Web page content to flexibly determine the publishing position, thereby preventing the problem in the prior art that the publishing position cannot be changed and is not flexible. Furthermore, the information to be published is inserted. Therefore, compared with the scheme in the prior art that the information to be published is directly fixed in the Web page content, this scheme facilitates changes to the information to be published by maintenance personnel at any time. In other word(s), the use of this scheme implements oriented and flexible publishing of information (such as advertisements) and facilitates modification of the information to be published.

### Embodiment 4

The structures of the Network Gateway and user behavior analysis server provided in this embodiment are basically the same as those in Embodiment 3. The difference is that the Network Gateway in this embodiment needs to combine the Web page keyword with the user feature when inserting an advertisement and therefore needs to add the function of analyzing Web page keyword(s). Therefore, compared with Embodiment 3, the Network Gateway in this embodiment adds a Web page keyword storing module, the user behavior analysis server adds a Web page keyword database, and the advertisement inserting module provides the function of extracting keyword(s).

(1) Network Gateway

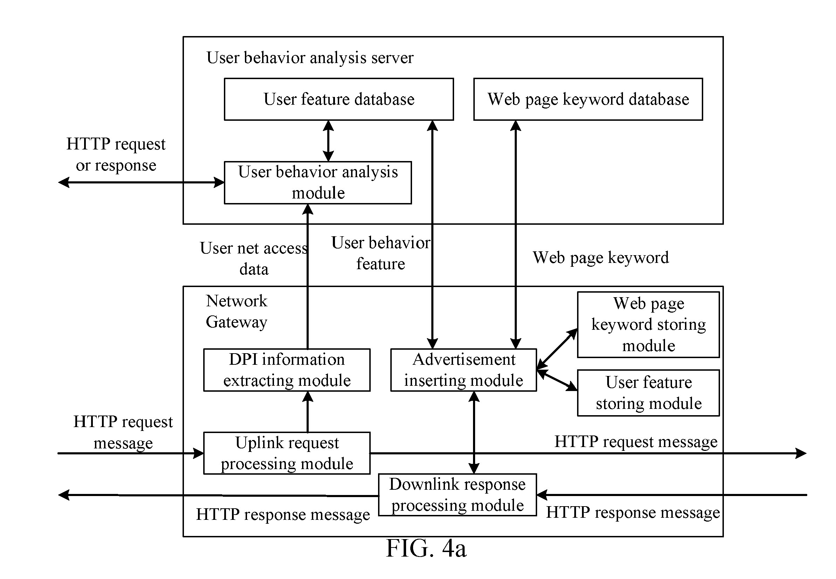

As shown in FIG. 4a, the Network Gateway can include:
an uplink request processing module, configured to process an HTTP request message sent by a user, forward the HTTP request message to a Web site server, and send the HTTP request message to a DPI information extracting module for identification and parsing, where, the HTTP request message contains a user identity;
a DPI information extracting module, configured to perform protocol identification on the HTTP request message, perform HTTP protocol parsing after identifying the request type as HTTP, parse a net access information field from the HTTP request message, and send user net access data such as the field and user identity to the user behavior analysis server for analysis;
a downlink response processing module, configured to process an HTTP response message sent by the Web site server, analyze and modify the HTTP response message, and forward the HTTP request message after modification to the terminal; and
an advertisement inserting module, configured to communicate with the user behavior analysis server to obtain a user behavior feature, extract a Web page keyword, determine a publishing position in the HTTP response message according to the user behavior feature and Web page keyword, and insert an advertisement to be published to the publishing position;
a user behavior storing module, configured to store and manage the user behavior feature to reduce the number of times of interaction between the advertisement inserting module and the user behavior analysis server and improve the system processing efficiency; and
a Web page keyword storing module, configured to store and manage the Web page keyword, reduce the times of interaction between the advertisement inserting module and the user behavior analysis server, and improve the system processing efficiency.

(2) User behavior analysis server

As shown in FIG. 4a, the user behavior analysis server can include:
a user behavior analysis module, configured to receive user net access data sent by the Network Gateway, download the Web page from the Internet according to the URL information, analyze the Web page content, and perform modeling on user behavior to analyze the user behavior, obtain the user behavior feature, and store the user behavior feature into a user feature database;
the user feature database, configured to store a mapping relationship between the user identity and the user behavior feature, and store the user behavior feature; and
a Web page keyword database, configured to store a mapping relationship between the Web page URL information and the Web page keyword, and the Web page keyword.

The following describes the process of the information publishing method. As shown in FIG. 2c, the process can include:

(1) User behavior analysis procedure

This is the prerequisite of the information publishing method provided in an embodiment of the present invention.

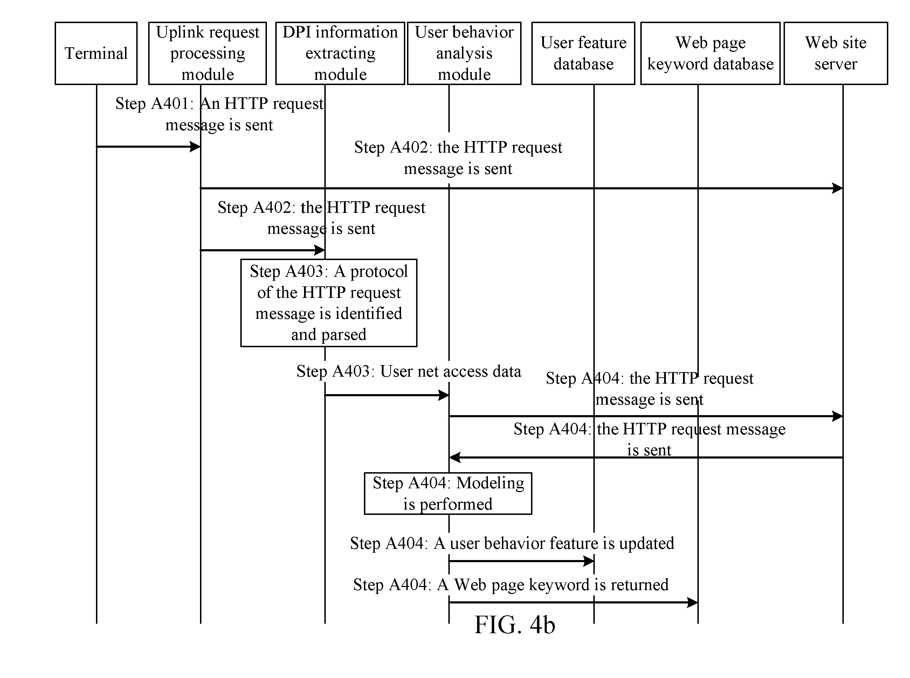

The user behavior analysis procedure is a constantly on-going procedure during the network running. The purpose is to perform modeling on user behavior by analyzing the user net access data to obtain the user behavior feature. The method is an existing technology, and therefore it is described briefly herein. As shown in FIG. 4b, the procedure is as follows:

Step A401: A terminal sends an HTTP request message to an uplink request processing module in a network device, where the HTTP request message contains a user identity and Web page URL information;

Step A402: After receiving the HTTP request message, the uplink request processing module forwards the HTTP request message to a Web site server, and sends the HTTP request message to a DPI information extracting module;

Step A403: The DPI information extracting module uses a DPI technology to perform protocol identification on the HTTP request message and identifies the HTTP request message as an HTTP report, and parses the HTTP request message according to the HTTP protocol to obtain a net access information field; and the DPI information extracting module obtains the user identity and Web page URL information that are contained in the HTTP request message, packs user net access data such as the net access information field, user identity, and Web page URL information as a user datagram protocol (UDP, User Datagram Protocol) message, and sends the UDP message to the user behavior analysis module of the user behavior analysis server.

Step A404: After receiving the UDP message sent by the Network Gateway, the user behavior analysis module obtains the user identity and Web page URL information from the UDP message, sends an HTTP request message to the Web site server according to the Web page URL information and obtains an HTTP response message, and obtains the Web page content by parsing the HTTP response message. The user behavior analysis module uses the phrase algorithm and keyword extracting algorithm to extract the keyword(s) that can express the core idea of the Web page content from the Web page content and the weights of the keyword(s), and then uses the keyword(s) to classify user behavior to complete a modeling process, updates the established model to the user feature database, and adds the Web page keyword to the Web page keyword database.

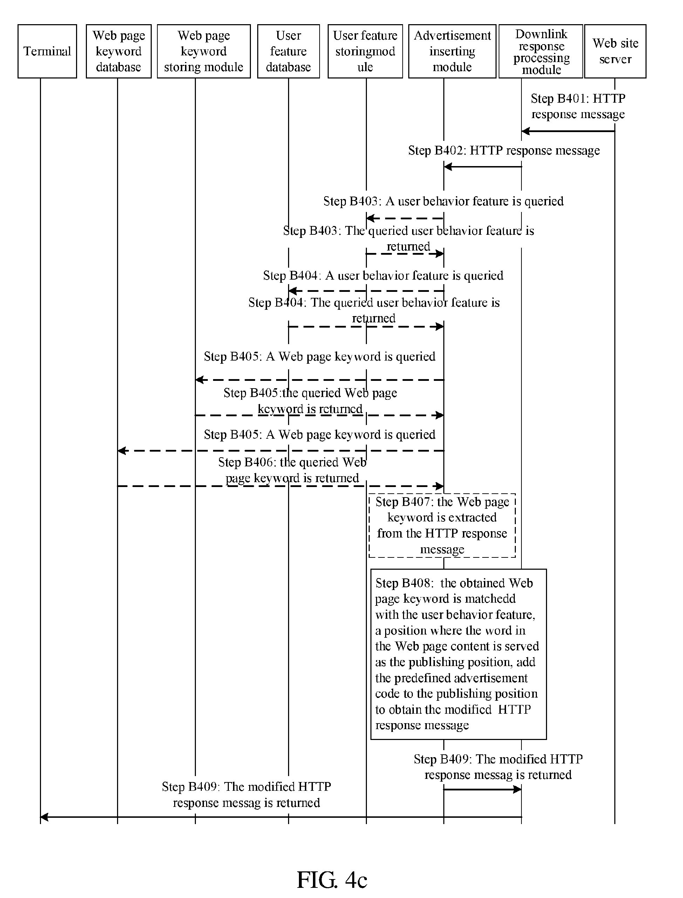

(2) After the user behavior analysis procedure is executed for a certain period and the user behavior model is established, the Network Gateway can publish information. It mainly refers to that an advertisement to be published that corresponds to the user behavior feature is inserted, according to the user behavior feature, into the HTTP response message returned by the Web site server. As shown in FIG. 4c, the procedure can include:

Step B401: The Web site server sends the HTTP response message to the downlink response processing module in the network device, where the message contains the HTTP protocol head and Web page content.

Step B402: The downlink response processing module sends the HTTP response message, and the user identity and Web page URL information that are in the HTTP request message that corresponds to the HTTP response message to the advertisement inserting module.

Step B403: The advertisement inserting module queries the user behavior feature from the user feature storing module, where
if the user behavior feature that corresponds to the user identity exists in the user feature storing module, the user behavior feature is returned to the advertisement inserting module, and go to step B405; and
if the user behavior feature that corresponds to the user identity does not exist in the user feature storing module, a failure message is sent to the advertisement inserting module, and go to step B404.

Step B404: The advertisement inserting module sends a query message to the user feature database to obtain the user behavior feature, where the query message contains the user identity;
after finding the user behavior feature according to the user identity, the user feature database sends the user behavior feature to the advertisement inserting module;
after the Network Gateway receives the user behavior feature, the user feature storing module determines whether to save this query result according to the storing algorithm;

Step B405: The advertisement inserting module queries the Web page keyword in the Web page keyword storing module according to the Web page URL information, where:
if the Web page keyword that corresponds to the Web page URL information exists in the Web page keyword storing module, the Web page keyword is returned to the advertisement inserting module, and go to step B408; and
if the Web page keyword that corresponds to the Web page URL information does not exist in the Web page keyword storing module, a failure message is returned to the advertisement inserting module, and go to step B406.

Step B406: The advertisement inserting module sends a query message to the Web page keyword database to obtain the Web page keyword, where, the query message contains the Web page URL information;
after finding the Web page keyword that corresponds to the Web page URL information according to the Web page URL information, the Web page keyword database sends the Web page keyword to the advertisement inserting module, and go to step B408; after receiving the Web page keyword, the Web page keyword storing module of the Network Gateway can determine whether to save this query result according to the storing algorithm;
it should be noted that if the Web page keyword that corresponds to the Web page URL information does not exist in the Web page keyword database, a failure message is returned to the advertisement inserting module, and go to step B407.

Step B407: After learning that the Web page keyword that corresponds to the Web page URL information does not exist in the Web page keyword database, the advertisement inserting module uses a keyword extracting algorithm to extract the Web page keyword from the HTTP response message.

Step B408: The advertisement inserting module matches the obtained Web page keyword(s) with the user behavior feature; and if the obtained Web page keyword(s) matches the user behavior feature, determine position(s) where the obtained Web page keyword(s) is in the Web page content as the publishing position(s), add the predefined advertisement code to the publishing position(s) to obtain a modified HTTP response message, and returning the modified HTTP response message to the downlink response processing module;
where, in specific implementation, adding the predefined advertisement code to the publishing position(s) can include: adding a floating advertisement next to the Web page keyword(s) at the publishing position(s), or adding a Web page link to the Web page keyword(s) at the publishing position(s) so that the advertisement is automatically displayed when the user clicks the word(s) or places the pointer at the word(s).

Step B409: The downlink response processing module analyzes and further modifies the modified HTTP response message, and sends the modified HTTP response message to the terminal for the terminal to display a Web page.

It can be seen that, in addition to the benefits of Embodiment 3, this embodiment further helps more precisely find a certain type of user by considering Web page keyword(s) when determining the publishing position(s), thereby implementing more precise advertisement publishing and increasing the benefits of advertisement publishing.

### Embodiment 5

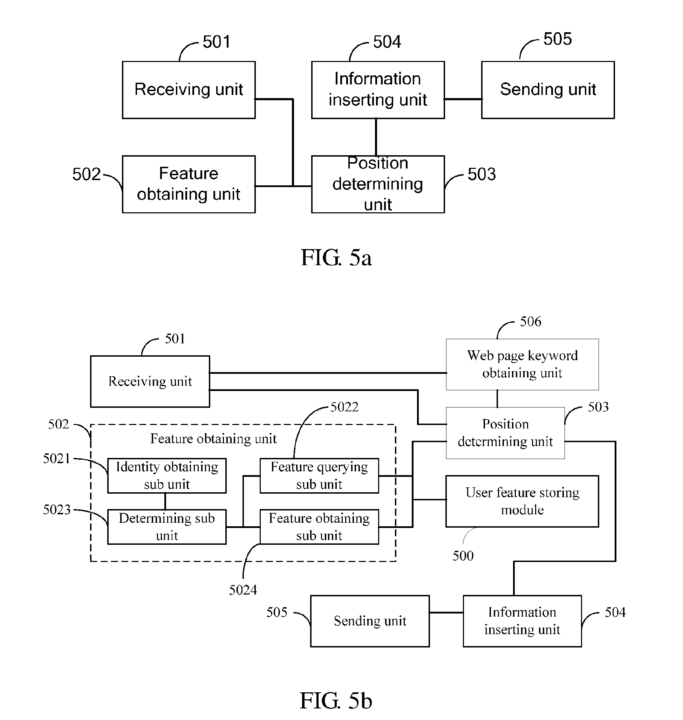

In order to implement the preceding method, the current embodiment further provides a network device, as shown in FIG. 5a. This network device includes:
a receiving unit 501, configured to receive a response message that corresponds to a user request message, where the response message contains Web page content,
as an example, the response message can be a Web page browsing response message such as an HTTP response message and messages using another network protocol, where the Web page browsing response message contains the Web page content;
a feature obtaining unit 502, configured to obtain a user behavior feature;
a position determining unit 503, configured to determine a publishing position in the Web page content according to the user behavior feature;
an information inserting unit 504, configured to add content of information to be published to the publishing position determined by the position determining unit 503 to obtain a modified response message; and
a sending unit 505, configured to send the modified response message obtained by the information inserting unit 504 to a terminal for display.

As shown in FIG. 5b, the feature obtaining unit 502 can further include:
an identity obtaining sub unit 5021, configured to obtain a user identity from the response message, or obtain the user identity from the user request message that corresponds to the response message; and
a feature querying sub unit 5022, configured to query the user feature database according to the user identity obtained by the identity obtaining sub unit 5021 to obtain the user behavior feature that corresponds to the user identity.

Generally, to not affect normal service processing of the network device such as a Network Gateway, the user feature is stored in another independent entity that is known as the user behavior analysis server in the embodiments of the present invention. For details, refer to the preceding embodiments. Therefore, to simplify the signaling flow between the network device and the user behavior analysis server, this network device can determine whether to save the user behavior feature in the user feature storing module according to the storing algorithm after obtaining the user behavior feature from the user feature database. If the network device determines that the user behavior feature needs to be saved, the network device does not need to query the user feature database next time when it needs to obtain the user behavior feature, but directly obtains the user behavior feature from the user feature storing module. That is, optionally, as shown in FIG. 5b, the network device can further include:
a user feature storing module 500, configured to store and manage the user behavior feature obtained by the feature obtaining unit 502.

As shown in FIG. 5b, the feature obtaining unit 502 can further include:
a determining sub unit 5023, configured to determine whether the user behavior feature that corresponds to the user identity exists in the user feature storing module 500 according to the user identity obtained by the identity obtaining sub unit 5021; and
a feature obtaining sub unit 5024, configured to obtain the user behavior feature that corresponds to the user identity from the user feature storing module 500 when the determining sub unit 5023 determines that the user behavior feature that corresponds to the user identity exists in the user feature storing module 500.

In addition, the feature querying sub unit 5022 is further configured to query the user feature database according to the user identity to obtain the user behavior feature that corresponds to the user identity when the determining sub unit 5023 determines that the user behavior feature that corresponds to the user identity does not exist in the user feature storing module 500.

The position determining unit 503 is specifically configured to find a word associated with the user behavior feature in the Web page content received by the receiving unit 501, in which a position where the word associated with the user behavior feature is in the Web page content is served as the publishing position, or an area within a first threshold range from the position where the word associated with the user behavior feature is in the Web page content is served as the publishing position.

In this case, the information inserting unit 504 is specifically configured to insert the content of the advertisement information that corresponds to the user behavior feature, or the user behavior feature and the word into the publishing position determined by the position determining unit 503 to obtain the response message for inserting the advertisement.

In addition to the user behavior feature, the publishing position can be determined by combining the user behavior feature and Web page keyword. That is, as shown in FIG. 5b, the network device can further include:
a Web page keyword obtaining unit 506, configured to obtain the Web page keyword related to the Web page content received by the receiving unit 501,
the position determining unit 503 is specifically configured to match the user behavior feature obtained by the feature obtaining unit 502 with the Web page keyword obtained by the Web page keyword obtaining unit 506; and, if the user behavior feature matches the Web page keyword, a position where the Web page keyword is in the Web page content is served as the publishing position, or an area within a first threshold range from the position where the Web page keyword is in the Web page content is served as the publishing position; and
the information inserting unit 504 is specifically configured to insert the content of advertisement information that corresponds to the user behavior feature to the publishing position determined by the position determining unit 503 to obtain a response message to which the content of advertisement information is inserted; or insert the content of the advertisement information that corresponds to the user behavior feature and Web page keyword to the publishing position determined by the position determining unit 503 to obtain a response message to which the content of advertisement information is inserted.

Alternatively,
the position determining unit 503 is specifically configured to find a word associated with the user behavior feature obtained by the feature obtaining unit 502 and the Web page keyword obtained by the Web page keyword obtaining unit 506, in which a position where the word associated with the user behavior feature and the Web page keyword is in the Web page content is served as the publishing position, or an area within a first threshold range from the position where the word associated with the user behavior feature and the Web page keyword is in the Web page content is served as the publishing position; and
the information inserting unit 504 is specifically configured to insert the content of the advertisement information that corresponds to the user behavior feature to the publishing position determined by the position determining unit 503 to obtain a response message to which the content of advertisement information is inserted; or insert the content of the advertisement information that corresponds to the user behavior feature and Web page keyword to the publishing position determined by the position determining unit 503 to obtain a response message to which the content of advertisement information is inserted.

Alternatively,
the position determining unit 503 is specifically configured to obtain the advertisement keyword that corresponds to the user behavior feature, find a word associated with the advertisement keyword in the Web page content, in which a position where the word associated with the advertisement keyword is in the Web page content is served as the publishing position, or an area within a first threshold range from the position where the word associated with the advertisement keyword is in the Web page content is served as the publishing position; and
the information inserting unit 504 is specifically configured to insert the content of the advertisement information that corresponds to the advertisement keyword to the publishing position determined by the position determining unit 503 to obtain a response message to which the content of advertisement information is inserted.

Further, the position determining unit 503 can further include:
a first advertisement keyword obtaining sub unit, configured to query the advertisement information database according to the user behavior feature to obtain the advertisement keyword that corresponds to the user behavior feature; or, search the advertisement keyword storing module for the advertisement keyword that corresponds to the user behavior feature according to the user behavior feature, and if no advertisement keyword is found in the advertisement keyword storing module, query the advertisement information database according to the user behavior feature to obtain the advertisement keyword that corresponds to the user behavior feature; and
a first position determining sub unit, configured to find the word associated with the advertisement keyword in the Web page content, in which a position where the word associated with the advertisement keyword is in the Web page content is served as the publishing position, or an area within a first threshold range from the position where the word associated with the advertisement keyword is in the Web page content is served as the publishing position.

Alternatively,
the position determining unit 503 is specifically configured to obtain an advertisement keyword associated with the user behavior feature obtained by the feature obtaining unit 502 and the Web page keyword obtained by the Web page keyword obtaining unit 506, find a word associated with the advertisement keyword in the Web page content, in which a position where the word associated with the advertisement keyword is in the Web page content is served as the publishing position, or an area within a first threshold range from the position where the word associated with the advertisement keyword is in the Web page content is served as the publishing position; and
the information inserting unit 504 is specifically configured to insert the content of the advertisement information that corresponds to the advertisement keyword to the publishing position determined by the position determining unit 503 to obtain a response message to which the content of advertisement information is inserted.

Further, the position determining unit 503 can include:
a second advertisement keyword obtaining sub unit, configured to query the advertisement information database according to the user behavior and Web page keyword to obtain the advertisement keyword that corresponds to the user behavior and Web page keyword; or search the advertisement keyword storing module for the advertisement keyword that corresponds to the user behavior and Web page keyword according to the user behavior and Web page keyword, and if no advertisement keyword is found in the advertisement keyword storing module, query the advertisement information database according to the user behavior and Web page keyword to obtain the advertisement keyword that corresponds to the user behavior feature; and
a second position determining sub unit, configured to find the word associated with the advertisement keyword in the Web page content, in which a position where the word associated with the advertisement keyword is in the Web page content is served as the publishing position, or an area within a first threshold range from the position where the word associated with the advertisement keyword is in the Web page content is served as the publishing position.

The Web page keyword obtaining unit 506 is specifically configured to extract a Web page keyword from the Web page content; or
the Web page keyword obtaining unit 506 is specifically configured to obtain a Web page link address, search the Web page keyword database for the Web page keyword that corresponds to the Web page link address according to the Web page link address, and if no Web page keyword is found in the Web page keyword database, extract the Web page keyword from the Web page content; or,
the Web page keyword obtaining unit 506 is specifically configured to obtain the Web page link address; search the Web page keyword storing module for the Web page keyword that corresponds to the Web page link address according to the Web page link address; if no Web page keyword is found in the Web page keyword storing module, search the Web page keyword database for the Web page keyword that corresponds to the Web page link address according to the Web page link address; and, if no Web page keyword is found in the Web page keyword database, extract the Web page keyword from the Web page content.

In the preceding implementation, the advertisement keyword is information that embodies the core idea of the advertisement content, the advertisement information database stores user behavior feature, advertisement keyword, and advertisement information content that are associated, and the first threshold can be flexibly set according to the actual application requirements.

The network device is a network transmission device located between the terminal and the Web site server, specifically, a network router or Network Gateway that provides the user data forwarding function.

In specific implementation, the receiving unit 501 and sending unit 502 can be used as the downlink response processing module, and the feature obtaining unit 502, position determining unit 503, and information inserting unit 504 are used as the published information inserting module; alternatively, the functions of the user feature storing module and Web page keyword storing module can be added to the feature obtaining unit 502.

For the implementation of the preceding units, see the preceding embodiments, and is not described here.

It can be seen from the above that, the feature obtaining unit 502 of the network device in this embodiment can obtain the user behavior feature to find a user group of a certain type and the position determining unit 503 and information inserting unit 504 insert the information to be published to the response message received by the receiving unit 501 according to the user behavior feature. The sending unit displays the response message inserted with the information to be published to the terminal for display, thereby implementing oriented publishing of information. In addition, the scheme can match the user behavior feature and Web page content to flexibly determine the publishing position, thereby preventing the case in the prior art where the publishing position cannot be changed. Further, the information to be published is inserted. Therefore, compared with the case in the prior art that the information to be published is fixed in the Web page content, this scheme facilitates changes to the information to be published by maintenance personnel at any time. That is, the use of this scheme helps implement oriented and flexible publishing of information such as advertisements, and facilitate modification of the information to be published.

### Embodiment 6

Accordingly, an information publishing system is provided in an embodiment of the present invention, including any network device provided in the embodiments of the present invention. The system includes:
a network device, configured to receive a response message that corresponds to a user request message, where the response message contains Web page content; obtain a user behavior feature; determine a publishing position in the Web page content according to the obtained user behavior feature; add content of information to be published to the publishing position to obtain a modified response message; and send the modified response message to a terminal for display. A user identity can be obtained from the received response message, or from the request message that corresponds to the response message.

The information publishing system can further include:
a user behavior server, configured to receive user net access data sent from the network device for user behavior analysis to obtain and store the user behavior feature for use by the network device. For details, refer to the prior art.

In specific implementation, the network device can include a downlink response processing module and an advertisement inserting module, and further include:
an uplink request processing module, configured to process an HTTP request message sent by a user, forward the HTTP request message to a Web site server, and send the HTTP request message to a DPI information extracting module for identification and parsing;
the DPI information extracting module, configured to receive the Web page request sent by the uplink request processing module for protocol identification and parsing to obtain user net access data, and send the user net access data to the user analysis server for analysis;
a downlink response processing module, configured to process the Web page response message that corresponds to the user request message sent by the Web site server, and send a Web page response message after the advertisement inserting module inserts an advertisement to the Web page response message to the terminal; and
the advertisement inserting module, configured to communicate with the user behavior analysis server after the downlink response processing module receives the Web page response message that corresponds to the user request message to obtain the user behavior feature, determine a publishing position in the Web page response message received by the downlink response processing module according to the user behavior feature, and insert the advertisement to be published to this publishing position.

The network device can further include:
a user behavior storing module, configured to store and manage the user behavior feature to reduce the times of interaction between the advertisement inserting module and the user behavior analysis server and improve the system processing efficiency.

The network device can further include:
a Web page keyword storing module, configured to store and manage the Web page keyword, reduce the times of interaction between the advertisement inserting module and the user behavior analysis server, and improve the system processing efficiency.

For the details about the preceding modules, refer to Embodiment 3 and Embodiment 4.

Alternatively, the information publishing system can include:
a terminal, configured to send a Web page browsing request to a Web site server to request for a Web page server; and
the Web site server, configured to receive the Web page browsing request sent from the terminal, and return a Web page browsing response message that contains Web page content.

For the implementation of the preceding units, see the preceding embodiments, and is not described here. The execution process of the information publishing system is briefed as follows:

(1) User behavior analysis procedure

This is the prerequisite of the information publishing method provided in an embodiment of the present invention. The user behavior analysis procedure includes:

Step A1: The terminal sends the Web page browsing request message to the network device, where the Web page browsing request message contains the user identity and Web page link information.

Step A2: The network device forwards the Web page browsing request message to the Web site server after receiving the Web page browsing request message.

Step A3: The network device uses a DPI technology to perform protocol identification on the Web page browsing request message and identifies a request type of the Web page browsing request message, and parses the Web page browsing request message according to the protocol that corresponds to the request type to obtain a net access information field; the network device obtains the user identity and Web page link information contained in the Web page browsing request message; and sends the obtained net access information field, user identity, and Web page link information as user net access data to the user behavior analysis server; and

Step A4: After receiving the user net access data, the user behavior analysis server obtains the user identity and Web page link information from the user net access data, performs modeling according to the user identity and Web page link information, and updating the model to the user feature library.

Alternatively, to obtain a precise model, the processing process of obtaining the Web page that corresponds to the Web page link information can be requested from the Web site server, and modeling can be performed according to the processing process according to the user identity, Web page link information, and Web page.

(2) After the user behavior analysis procedure is executed for a certain period and the user behavior model is established, information can be published. It mainly refers to that information to be published that corresponds to the user behavior feature is inserted, according to the user behavior feature, into the Web page browsing response message returned by the Web site server. The procedure can include:

Step B1: The Web site server sends the Web page browsing request message to the network device, where the Web page browsing response message contains the Web page content.

Step B2: The network device sends a query message for querying the user behavior feature to the user behavior analysis server, where the query message includes the user identity of a user to be queried.

Step B3: The user behavior server returns the user behavior feature of the user to be queried to the network device.

Step B4: The network device extracts the Web page keyword from the Web page browsing response message, matches the extracted web page keyword with the obtained user behavior feature, if the extracted Web page keyword matches the obtained user behavior feature, in which a position where the extracted Web page keyword is in the Web page content is served as the publishing position, and adds the content of the information to be published to this publishing position to obtain the Modified Web page browsing response message.
In addition, the Web page content can be directly searched according to the user behavior feature for associated word(s) without the need to extract the Web page keyword, in which a position where the associated word(s) is in the Web page content is served as the publishing position(s), and the code of the predefined information to be published is added to the position(s) where the associated word(s) is in the Web page content to modify the original Web page browsing response message.
It should be noted that for the convenience of the setting and modification of the information to be published, the network device needs to provide interfaces for device use personnel to set the code of the information to be published.

Step B5: The network device sends the Modified Web page browsing response message for the terminal to display the Web page.

It can be seen from the above that, the communication device in the information publishing system in this embodiment obtains the user behavior feature to find a certain type of user group, and publishes information according to the user group to implement oriented publishing of information. In addition, the information publishing system can match the user behavior feature with the Web page content to flexibly determine the publishing position, thereby preventing the problem in the prior art that the publishing position in the Web page content cannot be changed. Further, the information to be published is inserted. Therefore, compared with the scheme in the prior art where the information to be published is fixed in the Web page content, this scheme facilitates change to the information to be published by maintenance personnel. That is, the use of this scheme helps implement oriented and flexible publishing of information such as advertisements, and facilitate modification of the information to be published.

Those killed in the art can complete all or part of the steps in each of the preceding methods by using a program to instruct the hardware. The program can be stored in a storage medium that can be read by a computer. The storage medium can be Read Only Memory (ROM), Random Access Memory (RAM), disk, or compact disk (CD).

An information publishing method, an apparatus, and a system are provided in the preceding embodiments of the present invention. Several examples are used for illustration of the principles and implementation methods of the present invention. The description of these examples is used to help illustrate the method and its core principles in an embodiment of the present invention. Those skilled in the art can make various modifications and variations to the invention without departing from the spirit and scope of the invention. The invention is intended to cover the modifications and variations provided that they fall in the protection scope of protection defined by the invention.

## Claims

1. An information publishing method, comprising:
receiving a response message that corresponds to a user request message, wherein the response message contains Web page content;
obtaining a user behavior feature;
determining a publishing position in the Web page content according to at least the user behavior feature;
adding content of information to be published to the publishing position to obtain a modified response message; and
sending the modified response message to a terminal for display.

2. The method according to claim 1, wherein the obtaining the user behavior feature comprises:
obtaining a user identity from the response message, or obtaining a user identity from the user request message that corresponds to the response message; and
querying a user feature database according to the user identity to obtain the user behavior feature that corresponds to the user identity.

3. The method according to claim 2, wherein, before the querying the user feature database according to the user identity, the method further comprises:
determining whether the user behavior feature that corresponds to the user identity exists in a user feature storing module according to the user identity; and
if the user identity exists in the user feature storing module, obtaining the user behavior feature that corresponds to the user identity from the user feature storing module;
if the user identity does not exist in the user feature storing module, executing the process of querying the user feature database according to the user identity.

4. The method according to any one of claims 1 to 3, wherein the determining the publishing position in the Web page content according to at least the user behavior feature comprises:
finding a word associated with the user behavior feature in the Web page content, wherein a position where the word is in the Web page content is served as the publishing position, or an area within a first threshold range from the position where the word is in the Web page content is served as the publishing position;
the adding the content of information to be published to the publishing position to obtain the modified response message comprises: inserting content of advertisement information that corresponds to the user behavior feature to the publishing position to obtain a response message to which the content of advertisement information is inserted; or, inserting content of advertisement information that corresponds to the user behavior feature and the word to the publishing position to obtain a response message to which the content of advertisement information is inserted.

5. The method according to claim 1, further comprising:
obtaining a Web page keyword related to the Web page content;
the determining the publishing position in the Web page content according to at least the user behavior feature comprises: matching the user behavior feature with the Web page keyword; and if the user behavior feature matches the Web page keyword, a position where the Web page keyword is in the Web page content is served as the publishing position, or an area within a first threshold range from the position where the Web page keyword is in the Web page content is served as the publishing position; and
the adding the content of information to be published to the publishing position to obtain the modified response message comprises: inserting content of advertisement information that corresponds to the user behavior feature to the publishing position to obtain a response message to which the content of advertisement information is inserted; or,
inserting content of advertisement information that corresponds to the user behavior feature and the Web page keyword to the publishing position to obtain a response message to which the content of advertisement information is inserted..

6. The method according to claim 1, further comprising:
obtaining a Web page keyword related to the Web page content;
the determining the publishing position in the Web page content according to at least the user behavior feature comprises: finding a word associated with the user behavior feature and the Web page keyword in the Web page content, wherein a position where the word is in the Web page content is served as the publishing position, or an area within a first threshold range from the position where the word is in the Web page content is served as the publishing position; and
the adding the content of information to be published to the publishing position to obtain the modified response message comprises: inserting content of advertisement information that corresponds to the user behavior feature to the publishing position to obtain a response message to which the content of advertisement information is inserted; or,
inserting content of advertisement information that corresponds to the user behavior feature and the Web page keyword to the publishing position to obtain a response message to which the content of advertisement information is inserted.

7. The method according to any one of claims 1 to 3, wherein the determining the publishing position in the Web page content according to at least the user behavior feature comprises:
querying an advertisement information database according to the user behavior feature to obtain an advertisement keyword that corresponds to the user behavior feature; finding a word associated with the advertisement keyword in the Web page content, wherein a position where the word is in the Web page content is served as the publishing position, or an area within a first threshold range from the position where the word is in the Web page content is served as the publishing position;
the adding the content of information to be published to the publishing position to obtain the modified response message comprises: inserting content of advertisement information that corresponds to the advertisement keyword to the publishing position to obtain a response message to which the content of advertisement information is inserted.

8. The method according to claim 1, further comprising:
obtaining a Web page keyword related to the Web page content;
the determining the publishing position in the Web page content according to at least the user behavior feature comprises:
querying the advertisement information database according to the user behavior feature and the Web page keyword to obtain an advertisement keyword that corresponds to the user behavior feature and the Web page keyword; finding a word associated with the advertisement keyword in the Web page content, wherein a position where the word is in the Web page content is served as the publishing position, or an area within a first threshold range from the position where the word is in the Web page content is served as the publishing position; and
the adding the content of information to be published to the publishing position to obtain the modified response message comprises: inserting content of advertisement information that corresponds to the advertisement keyword to the publishing position to obtain a response message to which the content of advertisement information is inserted.

9. The method according to claim 5, 6, or 8, wherein the obtaining the Web page keyword related to the Web page content comprises:
extracting the Web page keyword from the Web page content; or
obtaining a Web page link address; searching a Web page keyword database for the Web page keyword that corresponds to the Web page link address according to the Web page link address; if the Web page keyword that corresponds to the Web page link address is not found in the Web page keyword database, extracting the Web page keyword from the Web page content; or,
obtaining a Web page link address; searching a Web page keyword storing module for the Web page keyword that corresponds to the Web page link address according to the Web page link address; if the Web page keyword that corresponds to the Web page link address is not found in the Web page keyword storing module, searching a Web page keyword database for the Web page keyword that corresponds to the Web page link address according to the Web page link address; and, if the Web page keyword that corresponds to the Web page link address is not found in the Web page keyword database, extracting the Web page keyword from the Web page content.

10. A network device, comprising:
a receiving unit, configured to receive a response message that corresponds to a user request message, wherein the response message contains Web page content;
a feature obtaining unit, configured to obtain a user behavior feature;
a position determining unit, configured to determine a publishing position in the Web page content according to at least the user behavior feature;
an information inserting unit, configured to add content of information to be published to the publishing position to obtain a modified response message; and
a sending unit, configured to send the modified response message obtained by the information inserting unit to a terminal for display.

11. The network device according to claim 10, wherein the feature obtaining unit comprises:
an identity obtaining sub unit, configured to obtain a user identity from the response message, or to obtain the user identity from the user request message that corresponds to the response message; and
a feature querying sub unit, configured to query the user feature database according to the user identity obtained by the identity obtaining sub unit to obtain the user behavior feature that corresponds to the user identity.

12. The network device according to claim 11, further comprising a user feature storing module, wherein:
the user feature storing module is configured to store and manage the user behavior feature obtained by the feature obtaining unit; and
the feature obtaining unit further comprises a determining sub unit and a feature obtaining sub unit, wherein:
the determining sub unit is configured to determine whether the user behavior feature that corresponds to the user identity exists in the user feature storing module according to the user identity obtained by the identity obtaining sub unit; and
the feature obtaining sub unit is configured to obtain the user behavior feature that corresponds to the user identity from the user feature storing module if the determining sub unit determines that the user behavior feature that corresponds to the user identity exists in the user feature storing module, wherein,
the feature querying sub unit is specifically configured query the user feature database according to the user identity obtained by the identity obtaining sub unit to obtain the user behavior feature that corresponds to the user identity if the determining sub unit determines that the user behavior feature that corresponds to the user identity does not exist in the user feature storing module.

13. The network device according to any one of claims 10 to 12, wherein:
the position determining unit is specifically configured to find a word associated with the user behavior feature in the Web page content, wherein a position where the word is in the Web page content is served as the publishing position, or an area within a first threshold range from the position where the word is in the Web page content is served as the publishing position; and
the information inserting unit is specifically configured to insert content of advertisement information that corresponds to the user behavior feature to the publishing position to obtain a response message to which the content of advertisement information is inserted; or, configured to insert content of advertisement information that corresponds to the user behavior feature and the word to the publishing position to obtain a response message to which the content of advertisement information is inserted.

14. The network device according to claim 10, wherein the network device further comprises:
a Web page keyword obtaining unit, configured to obtain a Web page keyword related to the Web page content received by the receiving unit, wherein:
the position determining unit is specifically configured to match the user behavior feature obtained by the feature obtaining unit with the Web page keyword obtained by the Web page keyword obtaining unit; and, if the user behavior feature matches the Web page keyword , a position where the Web page keyword is in the Web page content is served as the publishing position, or an area within a first threshold range from the position where the Web page keyword is in the Web page content is served as the publishing position; and
the information inserting unit is specifically configured to insert content of an advertisement information that corresponds to the user behavior feature to the publishing position to obtain a response message to which the content of advertisement information is inserted, or configured to insert content of an advertisement information that corresponds to the user behavior feature and the Web page keyword to the publishing position to obtain a response message to which the content of advertisement information is inserted.

15. The network device according to claim 10, wherein the network device further comprises:
a Web page keyword obtaining unit, configured to obtain a Web page keyword related to the Web page content received by the receiving unit, wherein:
the position determining unit is specifically configured to find a word associated with the user behavior feature obtained by the feature obtaining unit and the Web page keyword obtained by the Web page keyword obtaining unit, wherein a position where the word is in the Web page content is served as the publishing position, or an area within a first threshold range from the position where the word is in the Web page content is served as the publishing position; and
the information inserting unit is specifically configured to insert the content of advertisement information that corresponds to the user behavior feature to obtain a response message to which the content of advertisement information is inserted, or configured to insert the content of the advertisement information that corresponds to the user behavior feature and the Web page keyword into the publishing position to obtain a response message to which the content of advertisement information is inserted.

16. The network device according to any one of claims 10 to 12, wherein:
the position determining unit is specifically configured to obtain an advertisement keyword that corresponds to the user behavior feature, find a word associated with the advertisement keyword in the Web page content, wherein a position where the word is in the Web page content is served as the publishing position, or an area within a first threshold range from the position where the word is in the Web page content is served as the publishing position; and
the information inserting unit is specifically configured to insert content of advertisement information that corresponds to the advertisement keyword to the publishing position to obtain a response message to which the content of advertisement information is inserted.

17. The network device according to claim 10, wherein the network device further comprises:
a Web page keyword obtaining unit, configured to obtain a Web page keyword related to the Web page content received by the receiving unit, wherein:
the position determining unit is specifically configured to obtain an advertisement keyword that corresponds to the user behavior feature and Web page keyword, find a word associated with the advertisement keyword in the Web page content, wherein a position where the word is in the Web page content is served as the publishing position, or an area within a first threshold range from the position where the word is in the Web page content is served as the publishing position; and
the information inserting unit is specifically configured to insert content of advertisement information that corresponds to the advertisement keyword to the publishing position to obtain a response message to which the content of advertisement information is inserted.

18. The network device according to claim 14, 15, or 17, wherein:
the Web page keyword obtaining unit is specifically configured to extract a Web page keyword from the Web page content; or,
the Web page keyword obtaining unit is specifically configured to obtain a Web page link address, search the Web page keyword database for the Web page keyword that corresponds to the Web page link address according to the Web page link address, and if the Web page keyword that corresponds to the Web page link address is not found, extract the Web page keyword from the Web page content; or,
the Web page keyword obtaining unit is specifically configured to obtain the Web page link address; search the Web page keyword storing module for the Web page keyword that corresponds to the Web page link address according to the Web page link address; if the Web page keyword that corresponds to the Web page link address is not found in the Web page keyword storing module, search the Web page keyword database for the Web page keyword that corresponds to the Web page link address according to the Web page link address; and, if the Web page keyword that corresponds to the Web page link address is not found in the Web page keyword database, extract the Web page keyword from the Web page content.

19. An information publishing system, comprising a user behavior server and the network device according to any one of claims 10 to 18, wherein:
the user behavior server is configured to receive user net access data sent from the network device, and perform user behavior analysis on the user net access data to obtain a user behavior feature, and store the user behavior feature for use by the network device.
